# EUROPEAN PATENT APPLICATION

(11) **EP 4 518 476 A1**
(43) Date of publication of application: **05.03.2025**
(21) Application number: 22939121.4
(22) Date of filing: 28.04.2022
(51) Int. Cl.: H04W 72/04, H04W 72/12, H04L 5/00

(54) **PHYSICAL UPLINK SHARED CHANNEL CONFIGURATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Hersina, Günter
(86) International application number: PCT/CN2022/090013
(87) International publication number: WO 2023/206270

(57) **Abstract**

Embodiments of the present disclosure relate to a physical uplink shared channel (PUSCH) configuration method and apparatus, a communication device, and a storage medium. The method comprises: for non-coherent joint transmission (NC-JT) of a PUSCH, configuring different transmission configuration indications (TCIs) for different antenna panels of a terminal, wherein the TCIs are associated with beam information, different TCIs are simultaneously associated with the same transmission resource, the transmission resource comprises: a time-domain resource and a frequency-domain resource, and multiple different antenna panels perform NC-JT of the PUSCH by using space division multiplexing (SDM).

## Description

### TECHNICAL FIELD

The present disclosure relates to, but is not limited to, a field of wireless communication technologies, and more particularly to a method and an apparatus for physical uplink shared channel (PUSCH) configuration, a communication device, and a storage medium.

### BACKGROUND

Multiple Input Multiple Output (MIMO) is an antenna system that uses more than one antenna at both a transmitter and a receiver and forms more than one channel between the transmitter and the transmitter in order to increase channel capacity.

In a MIMO system, both the transmitter and the receiver communicate using more than one antenna that can operate simultaneously. The MIMO system generally employ complex signal processing technologies to significantly enhance reliability, transmission range and throughput. The transmitter sends more than one radio frequency signal simultaneously, and the receiver recovers data from these signals.

### SUMMARY

In view of this, the present disclosure provides a method and an apparatus for physical uplink shared channel (PUSCH) configuration, a communication device, and a storage medium.

According to a first aspect of embodiments of the present disclosure, there is provided a method for PUSCH configuration. The method includes:
configuring different transmission configuration indications (TCIs) for different antenna panels of a terminal, for a non-coherent joint transmission (NC-JT) of a PUSCH; in which the TCIs are associated with beam information, and the different TCIs are associated with the same transmission resource simultaneously, the transmission resource includes a time domain resource and a frequency domain resource, a plurality of different antenna panels perform the NC-JT of the PUSCH using spatial division multiplexing (SDM).

In an embodiment, the different TCIs are associated with different data transmission layer sets, one of the data transmission layer sets comprises one or more data transmission layers, and data transmission layers of the different data transmission layer sets are different.

In an embodiment, the method further includes: performing, by the different antenna panels of the terminal, a single codeword (CW) transmission corresponding to one transport block (TB) for the NC-JT of the PUSCH, in which one CW is associated with multiple data transmission layers, one CW is associated with a plurality of data transmission layers, the plurality of data transmission layers associated with the one CW at least belong to two of the data transmission layer sets.

In an embodiment, the method further includes performing by the different antenna panels of the terminal the single codeword (CW) transmission for the NC-JT of the PUSCH using a single redundancy version (RV).

In an embodiment, the method further includes performing by the different antenna panels of the terminal a multiple codeword (CW) transmission corresponding to one TB for the NC-JT of the PUSCH, in which one CW corresponds to one data transmission layer set.

In an embodiment, different codeword (CW) transmission for the NC-JT of the PUSCH is implemented by the terminal by using a plurality of RVs.

In an embodiment, the method further includes performing by the different antenna panels of the terminal the NC-JT of the PUSCH using a single modulation and coding strategy (MCS).

In an embodiment, different TCIs correspond to the same number of data transmission layers.

In an embodiment, the method further includes performing by the different antenna panels of the terminal the NC-JT of the PUSCH using different MCSs.

In an embodiment, the different TCIs correspond to the same number of data transmission layers;
or,
the different TCIs correspond to different numbers of data transmission layers.

In an embodiment, a maximum number of data transmission layers in a data transmission layer set associated with the TCI is a maximum number of data transmission layers supported by an antenna panel corresponding to the TCI.

In an embodiment, the different TCIs are associated with different demodulation reference signal (DMRS) port sets, one of the DMRS port sets includes one or more DMRS ports, and DMRS ports in the different DMRS port sets are different.

In an embodiment, the different TCIs correspond to different transmission reception point (TRP) directions of a base station.

In an embodiment, the different TCIs indicate different quasi co-located type-D source reference signals, and the quasi co-located type-D source reference signals are configured to determine the TRP directions.

In an embodiment, the TCI includes one of:
a unified TCI;
a spatial relation information (SRI); or
a sounding reference signal resource indication (SRI).

In an embodiment, different unified TCIs are carried in different TCI indication fields;
or,
the different unified TCIs are carried in one TCI indication field.

In an embodiment, the unified TCI includes one of:
a joint TCI; or
a separate TCI.

In an embodiment, the PUSCH includes at least one of:
a downlink control information (DCI) scheduled PUSCH;
a scheduling-free typel configured grant (CG) PUSCH; or
a scheduling-free type 2 CG PUSCH.

In an embodiment, the TCI is carried in at least one of:
a radio resource control (RRC) signaling;
a media access control-control unit (MAC-CE) signaling; or
a DCI signaling.

According to a second aspect of embodiments of the present disclosure, there is provided an apparatus for PUSCH configuration. The apparatus includes:
a processing module, configured to configure different transmission configuration indications (TCIs) for different antenna panels of a terminal, for a non-coherent joint transmission (NC-JT) of a PUSCH; in which the TCIs are associated with beam information, and the different TCIs are associated with the same transmission resource simultaneously, the transmission resource includes a time domain resource and a frequency domain resource, a plurality of different antenna panels perform the NC-JT of the PUSCH using spatial division multiplexing (SDM).

In an embodiment, the different TCIs are associated with different data transmission layer sets, one of the data transmission layer sets comprises one or more data transmission layers, and data transmission layers of the different data transmission layer sets are different.

In an embodiment, the processing module is configured to perform by the different antenna panels of the terminal a single codeword (CW) transmission corresponding to one transport block (TB) for the NC-JT of the PUSCH, in which, one CW is associated with multiple data transmission layers, one CW is associated with a plurality of data transmission layers, the plurality of data transmission layers associated with the one CW at least belong to two of the data transmission layer sets.

In an embodiment, the processing module is configured to perform by the different antenna panels of the terminal the single codeword (CW) transmission for the NC-JT of the PUSCH using a single redundancy version (RV).

In an embodiment, the processing module is configured to perform by the different antenna panels of the terminal a multiple codeword (CW) transmission corresponding to one TB for the NC-JT of the PUSCH, in which one CW corresponds to one data transmission layer set.

In an embodiment, different codeword (CW) transmission for the NC-JT of the PUSCH is implemented by the terminal by using a plurality of RVs.

In an embodiment, the processing module is configured to perform by the different antenna panels of the terminal the NC-JT of the PUSCH using a single modulation and coding strategy (MCS).

In an embodiment, different TCIs correspond to the same number of data transmission layers.

In an embodiment, the processing module is configured to perform by the different antenna panels of the terminal the NC-JT of the PUSCH using different MCSs.

In an embodiment, the different TCIs correspond to the same number of data transmission layers;
or,
the different TCIs correspond to different numbers of data transmission layers.

In an embodiment, a maximum number of data transmission layers in a data transmission layer set associated with the TCI is a maximum number of data transmission layers supported by an antenna panel corresponding to the TCI.

In an embodiment, the different TCIs are associated with different demodulation reference signal (DMRS) port sets, one of the DMRS port sets comprises one or more DMRS ports, and DMRS ports in the different DMRS port sets are different.

In an embodiment, the different TCIs correspond to different transmission reception point (TRP) directions of a base station.

In an embodiment, the different TCIs indicate different quasi co-located type-D source reference signals, and the quasi co-located type-D source reference signals are configured to determine the TRP directions.

In an embodiment, the TCI includes one of:
a unified TCI;
a spatial relation information (SRI); or
a sounding reference signal resource indication (SRI).

In an embodiment, different unified TCIs are carried in different TCI indication fields;
or,
the different unified TCIs are carried in one TCI indication field.

In an embodiment, the unified TCI includes one of:
a joint TCI; or
a separate TCI.

In an embodiment, the PUSCH includes at least one of:
a downlink control information (DCI) scheduled PUSCH;
a scheduling-free typel configured grant (CG) PUSCH; or
a scheduling-free type 2 CG PUSCH.

In an embodiment, the TCI is carried in at least one of:
a radio resource control (RRC) signaling;
a media access control-control unit (MAC-CE) signaling; or
a DCI signaling.

According to a third aspect of embodiments of the present disclosure, there is provided a communication device, including a processor, a memory, and an executable program stored on the memory and capable of being run by the processor, in which, the processor is configured to implement the method for physical uplink shared channel (PUSCH) configuration according to any one of claims 1 to 19 when running the executable program.

According to a fourth aspect of embodiments of the present disclosure, there is provided a storage medium storing an executable program, in which, when the executable program is executed by a processor, steps of the method for physical uplink shared channel (PUSCH) configuration according to any one of claims 1 to 19 is implemented.

According to the method and the apparatus for PUSCH configuration, the communication device and the storage medium provided by embodiments of the present disclosure, for the NC-JT of the PUSCH, different TCIs are configured for the different antenna panels of the terminal, the TCIs are associated with beam information, and the different TCIs are associated with the same transmission resource simultaneously, the transmission resource includes the time domain resource and the frequency domain resource, the plurality of different antenna panels perform the NC-JT of the PUSCH using the SDM. Therefore, on the one hand, different TCIs indicate the beam information of different antenna panels respectively, and the beam information of each antenna panel can be configured separately, which improves flexibility of beam configuration. On the other hand, with performing the NC-JT of the PUSCH using the SDM, the plurality of different antenna panels perform transmission simultaneously, which reduces an uplink transmission delay under multi-TRPs and improves throughput. Different antenna panels can be independently precoded, an impact of a transmission environment on transmission is reduced, and transmission reliability is improved. The plurality of antenna panels performs transmission using the same transmission resource, the transmission resource is saved and transmission resource utilization is improved.

It is to be understood that both the foregoing general description and the following detailed description are exemplary and explanatory only, and are not restrictive of the disclosure.

### BRIEF DESCRIPTION OF THE DRAWINGS

The accompanying drawings, which are incorporated in and constitute a part of this specification, illustrate embodiments consistent with the disclosure, and serve to explain the principle of the disclosure together with the description.
FIG. 1 is a schematic diagram illustrating a structure of a wireless communication system according to an illustrative embodiment.
FIG. 2 is a schematic diagram illustrating an MTRP downlink transmission architecture according to an illustrative embodiment.
FIG. 3 is a schematic diagram illustrating another MTRP downlink transmission architecture according to an illustrative embodiment.
FIG. 4 is a schematic diagram illustrating a dynamic point selection transmission according to an illustrative embodiment.
FIG. 5 is a schematic diagram illustrating a coherent joint transmission according to an illustrative embodiment.
FIG. 6 is a schematic diagram illustrating a non-coherent joint transmission according to an illustrative embodiment.
FIG. 7 is a flowchart illustrating a method for PUSCH configuration according to an illustrative embodiment.
FIG. 8 is a flowchart illustrating another method for PUSCH configuration according to an illustrative embodiment.
FIG. 9 is a schematic diagram illustrating an MTRP uplink SDM transmission architecture according to an illustrative embodiment.
FIG. 10 is a schematic diagram illustrating an MTRP uplink SDM transmission according to an illustrative embodiment.
FIG. 11 is a flowchart illustrating yet another method for PUSCH configuration according to an illustrative embodiment.
FIG. 12 is a schematic diagram illustrating another MTRP uplink SDM transmission architecture according to an illustrative embodiment.
FIG. 13 is a schematic diagram illustrating another MTRP uplink SDM transmission according to an illustrative embodiment.
FIG. 14 is a block diagram illustrating an apparatus for PUSCH configuration according to an illustrative embodiment.
FIG. 15 is a block diagram illustrating a device for PUSCH configuration according to an illustrative embodiment.

### DETAILED DESCRIPTION

Illustrative embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following illustrative embodiments do not represent all implementations consistent with the present disclosure. Instead, they are merely examples of apparatuses and methods consistent with some aspects of the disclosure as described in the appended claims.

The terms in embodiments of the present disclosure are only for the purpose of describing specific embodiments, and are not intended to limit embodiments of the present disclosure. The singular forms of "a", "said" and "the" in embodiments of the present disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second and third may be used in embodiments of the present disclosure to describe various information, the information should not be limited to these terms. These terms are only used to distinguish the same type of information from each other. For example, without departing from the scope of the present disclosure, the first information may also be referred to as the second information, and similarly, the second information may also be referred to as the first information. In different contexts, the term "if" used herein is interpreted as "when" or "upon" or "in response to determining".

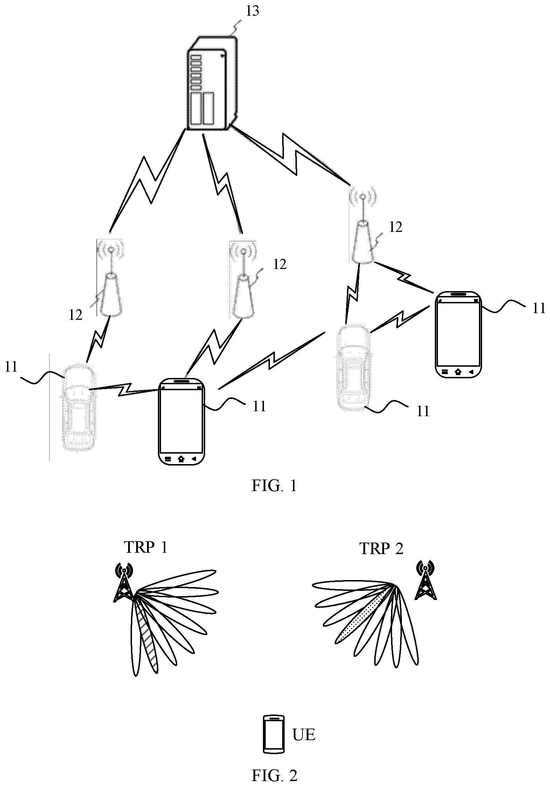

Referring to FIG. 1, FIG. 1 is a schematic diagram illustrating a structure of a wireless communication system according to an illustrative embodiment. As illustrated in FIG. 1, a wireless communication system is a communication system based on cellular mobile communication technologies. The wireless communication system may include several terminals 11 and several base stations 12.

The terminal 11 may be a device that provides voice and/or data connectivity to a user. The terminal 11 may communicate with one or more core networks through radio access network (RAN). The terminal 11 may be an Internet of Things terminal, such as a sensor device, a mobile phone (or "cellular" phone) and a computer with the Internet of Things terminal, such as fixed, portable, pocket, handheld, computer built-in or on-board devices, for example, a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may also be a device of an unmanned aerial vehicle. Alternatively, the terminal 11 may also be a vehicle-mounted device, for example, a vehicle computer with a wireless communication function, or a wireless communication device connected externally to the vehicle computer. Alternatively, the terminal 11 may also be a roadside device, for example, a street lamp, a signal light or other roadside devices with the wireless communication function.

The base station 12 may be a network side device in the wireless communication system. The wireless communication system may be the 4th generation mobile communication (4G) system, also called as a Long Term Evolution (LTE) system. Alternatively, the wireless communication system may also be a 5G system, also called as a new radio (NR) system or a 5G NR system. Alternatively, the wireless communication system may also be the next generation system of the 5G system. An access network in the 5G system may be called as NG-RAN (New Generation-Radio Access Network), or an MTC system.

The base station 12 may be an evolutionary base station (eNB) used in the 4G system. Alternatively, the base station 12 may also be a base station (gNB) used a centralized distributed architecture in the 5G system. When using the centralized and distributed architecture, the base station 12 generally includes a central unit (CU) and at least two distributed units (DU). The centralized unit is provided with protocol stacks of a packet data convergence protocol (PDCP) layer, a radio link control (RLC) protocol layer and a media access control (MAC) layer. The distribution unit is provided with a protocol stack of a physical (PHY) layer. Embodiments of the present disclosure do not define the specific implementation mode of the base station 12.

A wireless connection may be set up between the base station 12 and the terminal 11 via a wireless air-interface. In different embodiments, the wireless air-interface is a wireless air-interface based on the 4th generation mobile communication network technology (4G) standard. Alternatively, the wireless air-interface is a wireless air-interface based on the 5th generation mobile communication network technology (5G) standard, for example, the wireless air-interface is a new radio. Alternatively, the wireless air-interface may also be a wireless air-interface based on the next generation mobile communication network technology standard relative to 5G.

In some embodiments, an E2E (End to End) connection, for example, V2V (vehicle to vehicle) communication, V2I (vehicle to Infrastructure) communication and V2P (vehicle to pedestrian) communication in vehicle to everything (V2X), and other scenarios, may also be set up between terminals 11.

In some embodiments, the wireless communication system described above may also include a network management device 13.

Several base stations 12 are respectively connected to the network management device 13. The network management device 13 may be the core network device in the wireless communication system. For example, the network management device 13 may be a mobility management entity (MME) in an evolved packet core (EPC). Alternatively, the network management device may also be other core network devices, such as a serving gateway (SGW), a public data network gateway (PGW), a policy and charging rules function (PCRF), or a home subscriber server (HSS), and the like. Embodiments of the present disclosure do not define the implementation form of the network management device 13.

In order to improve cell edge coverage and provide more balanced service quality within a service region, coordinated multiple point transmission (CoMP) is still an important technical means in the new radio (NR) system. From a perspective of network form, network deployment with a large number of distributed access points combined with centralized baseband processing may be more conducive to providing a balanced user experience rate, and significantly reduce a delay and a signaling overhead caused by handover. As a frequency band increases, starting from a perspective of ensuring network coverage, relatively dense deployment of access points is also required. In a high-frequency band, there will be a greater tendency to adopt modular active antenna arrays with improvement of integration of active antenna devices.

According to a mapping relation between a sending signal stream and multiple transmission reception points (TRPs)/antenna panels, the coordinated multiple point transmission technology can be classified into two types of a coherent transmission and a non-coherent transmission. For the coherent transmission, each data layer may be mapped to the multiple TRPs/panels by means of weighted vectors. For the non-coherent transmission, each data stream is only mapped to part of the TRPs/panels. The coherent transmission has higher requirements for synchronization between transmission reception points and a transmission capacity of a backhaul link, and is therefore sensitive to many non-ideal factors in actual deployment conditions. By contrast, the non-coherent transmission is less affected by the above factors, and is therefore a key consideration for the multiple point transmission technology.

Quasi co-location (QCL) refers to that large-scale parameters of a channel experienced by a symbol on a certain antenna port can be inferred from a channel experienced by a symbol on another antenna port. The large-scale parameters may include delay spread, average delay, Doppler spread, Doppler shift, an average gain, and a spatial reception parameter, etc.

The concept of the QCL is introduced with emergence of the coordinated multiple point transmission technology. Multiple points in a coordinated multiple point transmission process may correspond to multiple stations (including TRPs) with different geographical locations or multiple sectors with different antenna panel orientations. For example, when a terminal receives data from different stations, spatial differences of respective stations may lead to differences in large-scale channel parameters of receiving links from different stations, such as Doppler frequency offset, delay spread, etc. The large-scale parameters of the channel may directly affect adjustment and optimization of filter coefficients for channel estimation. Corresponding to signals sent by different stations, different filter coefficients for channel estimation should be used to adapt to the corresponding channel propagation characteristics.

Therefore, although differences in spatial position or angle of respective stations are transparent to a UE and a CoMP operation itself, an impact of the above-mentioned differences in spatial on the large-scale channel parameters is an important factor that the UE needs to consider when performing channel estimation and reception detection. Two antenna ports being QCL in a case of certain large-scale parameters refers to that these large-scale parameters of the two ports are the same. In other words, as long as certain large-scale parameters of the two ports are consistent, regardless of whether there are differences in their actual physical locations or corresponding antenna panel orientations, the terminal may consider that the two ports originate from the same location (i.e., quasi co-station location).

For some typical application scenarios, taking into account possible QCL relations between various reference signals, starting from a perspective of simplifying signaling, several large-scale channel parameters are classified into following 4 types in NR to facilitate the system to configure and indicate according to different scenarios.

QCL-TypeA: {Doppler frequency shift, Doppler extension, average delay, delay spread}
- Except for the spatial reception parameter, other large-scale parameters are all the same.
- For a frequency band below 6GHz, the spatial reception parameter may not be required.

QCL-TypeB: {Doppler frequency shift, Doppler spread }
- Only for following two situations in the frequency band below 6GHz.

QCL-TypeC: {Doppler frequency shift, average delay}

QCL-Type-D: {space receiving parameter}
- As mentioned the above, this parameter is mainly directed to a frequency band above 6GHz, and is taken as a separate QCL type.

In NR Release 15 (Rel-15), demodulation reference signal (DMRS) ports in each code division multiplexing (CDM) group is QCL.

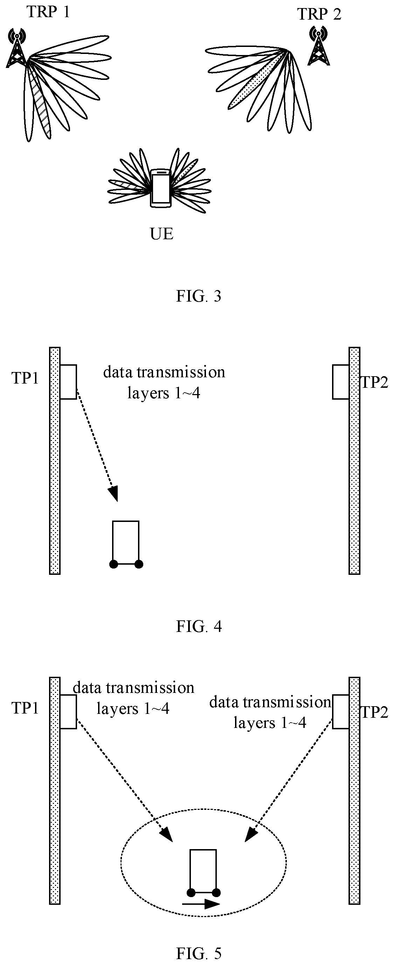

A coordinated multiple point transmission scenario, as shown in FIG. 2, includes one terminal and a plurality of TRPs. As shown in FIG. 3, the terminal may perform PUSCH transmission in a plurality of TRP directions of a base station. The terminal may perform coordinated transmission using time-division multiplexing (TDM) transmission. The terminal sends the same TB for the PUSCH to different TRPs of the base station at different transmission occasions in a time domain in a time-sharing manner. The method has relatively low requirements on terminal capabilities, without requirements on an ability to support simultaneous transmission of beams, and has a large transmission delay.

For uplink transmission, spatial characteristics of actual channels passed by PUSCH channels facing different TRPs may be very different. Therefore, it is considered that QCL-D of PUSCH channels with different sending directions is different.

According to the mapping relation between the sending signal stream and multiple TRPs/antenna panels, the coordinated multiple point transmission technology may be roughly classified into two types of a coherent transmission and a non-coherent transmission.

During coherent transmission, each data transmission layer is mapped to multiple TRPs/antenna panels participating in the coordinated transmission by means of weighted vectors. If the large-scale channel parameters of respective TRPs/antenna panels are the same and the same frequency source is used, the coherent transmission is equivalent to splicing multiple sub-arrays into a higher-dimensional virtual array, thus achieving higher shaping/precoding/multiplexing gain. However, in an actual deployment environment, the method has higher requirements for synchronization between transmission reception points and a transmission capability of backhaul.

The non-coherent transmission refers that each data stream is only mapped to ports corresponding to TRPs/antenna panels with the same large-scale channel parameter (i.e. QCL). Different data streams may be mapped to ports with different QCL, without a need to unify all coordinated points (multiple TRPs/antenna panels for the coordinated transmission) into a virtual array and perform joint shaping for each layer.

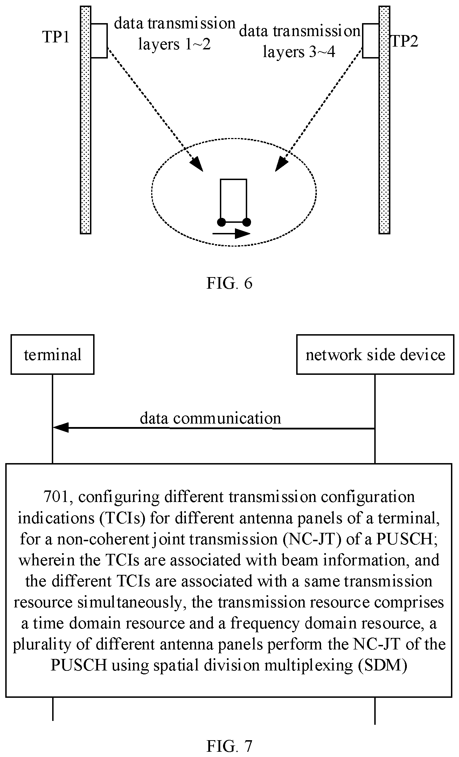

Joint transmission may include a dynamic point selection (DPS) transmission, a coherent joint transmission (C-JT), a non coherent joint transmission (NC-JT), etc. As shown in FIG. 4, data transmission layers corresponding to all codewords of a single-point transmission (that is, the DPS transmission) are sent via one transmission point; as shown in FIG. 5, in C-JT, all codewords and layers are jointly precoded by two transmission points before being sent; as shown in FIG. 6, in a NC-JT mode, two data transmission layers corresponding to codeword 0 are sent from transmission reception point 1 (TP1, Transmit Point 1), and two data transmission layers corresponding to codeword 1 are sent from TP2.

In a time division multiplexing (TDM) transmission mode, the terminal sends the same one TB for the PUSCH to different TRPs of the base station at different transmission occasions in a time domain in a time-sharing manner, which has a large delay and a low throughput rate. How to improve reliability and throughput of transmission while effectively reducing a transmission delay under multiple TRPs is an issue that is to be solved urgently.

As shown in FIG. 7, this illustrative embodiment provides a method for PUSCH configuration. The method may be performed by a network side device and/or a terminal of a cellular mobile communication system, and include a following step.

At step 701, different TCIs are configured for different antenna panels of the terminal, for an NC-JT of a PUSCH; in which the TCIs are associated with beam information, and the different TCIs are associated with the same transmission resource simultaneously, the transmission resource includes a time domain resource and a frequency domain resource, a plurality of different antenna panels perform the NC-JT of the PUSCH using SDM.

This embodiment may be applied to, but is not limited to, a core network device, an access network device and other network side devices, and/or a terminal. The terminal here may include a handheld terminal and/or a non-handheld terminal, etc. No limitation is made here.

The terminal may be a UE capable of implementing coordinated multiple point transmission to a plurality of TRP directions of a base station simultaneously. The UE can implement uplink coordinated multiple point transmission in the plurality of TRP directions of the base station simultaneously. The coordinated multiple point transmission/reception (CoMP) refers to that a plurality of TRPs, that are geographically separated, coordinately send data to one terminal or coordinately receive data sent by one terminal. Here, the TRP may include an antenna panel of the base station, etc.

For example, the UE may support the NC-JT of the PUSCH to N TRPs of the base station by N antenna panels simultaneously, where N is a positive integer greater than or equal to 2. Each antenna panel of the UE may correspond to one TRP of the base station.

One TCI may be configured for each antenna panel of the terminal. The TCI is used to indicate beam information of a beam used when the corresponding antenna panel performs the NC-JC of the PUSCH. The beam information is used to indicate at least a direction of the beam and the like. The TCI may be a TCI State.

Configuring different TCIs for different antenna panels of the terminal may be that the network side device may configure different TCIs for the antenna panels of the terminal respectively. Configuring different TCIs for different antenna panels of the terminal may be that the terminal may determine different TCIs for the antenna panels respectively.

Each antenna panel can perform independent precoding processing using a precoding matrix corresponding to each antenna panel to perform the NC-JT. That is, joint shaping is not performed on the antenna panel.

In an embodiment, the TCI includes one of:
a unified TCI;
a spatial relation information (SRI); or
a sounding reference signal resource indication (SRI).

The TCI may be the unified TCI. The SRI may be used when the unified TCI is not configured.

The unified TCI may be used when the TRP has beam consistency. The unified TCI indicates uplink and downlink beams by means of multiple channels and signal sharing, and multiple CCs use a common beam. The TRP having beam consistency may include: a downlink receiving beam and an uplink transmitting beam of the TRP have reciprocity, that is, the downlink receiving beam and the uplink transmitting beam are beam correspondence. During the beam consistency, a direction of an uplink beam is also a direction of a downlink beam.

The base station may also indicate the TCI to the terminal using spatial relation information (SRI, Spatial Relation Info).

The base station may also carry the TCI by the sounding reference signal resource indication (SRI, Sounding Reference Signal RESOURCE INDICATOR). The sounding reference signal resource indication is configured to indicate, in a codebook transmission, an uplink transmitting analog beam direction corresponding to an SRS resource specifically used for sending the PUSCH, and to indicate, in non-codebook transmission, which SRS resources are specifically used for sending the PUSCH, as precoding for the PUSCH, namely, transmit beam directions of different layers. Reserved bits of the sounding reference signal resource indication may be used to carry the TCI. Different sounding reference signal resource indications may be sent for different antenna panels. The TCI in the sounding reference signal resource indication may be directly associated with an antenna panel that receives the sounding reference signal resource indication.

In an embodiment, the unified TCI includes one of:
a joint TCI; or
a separate TCI.

Different TCIs corresponding to different antenna panels may be joint TCIs or separate TCIs.

The unified TCI may include a joint TCI state and a separate TCI. The joint TCI is used to indicate an uplink transmitting beam and a downlink receiving beam simultaneously, and the separate TCI is used to indicate the uplink transmitting beam or the downlink receiving beam.

In an embodiment, the different TCIs correspond to different transmission reception point (TRP) directions of a base station.

The beams indicated by the TCI may be perform transmission simultaneously, such as in the same slot, using the same time domain resource and frequency domain resource. The TCI may realize performing the NC-JT of the PUSCH by different antenna panels using the SDM by indicating beams in different directions.

In an embodiment, the different TCIs indicate different quasi co-located type-D source reference signals, and the quasi co-located type-D source reference signals are configured to determine the TRP directions.

The quasi co-located type-D source reference signal (QCL Type-D source RS) may include at least one of a channel state information reference signal (CSI-RS), a synchronous signal broadcast channel block (SSB, synchronous signal/PBCH block), or a sounding reference signal (SRS).

The base station and the UE may exchange different quasi co-located type-D source reference signals in different beams to determine different beams that can communicate. One quasi co-located type-D source reference signal has an association relation with one beam. The association relation may be a one-to-one correspondence. The directions of different beams may be different.

The TCI may indicate a beam in one direction via the quasi co-located type-D source reference signal.

In an embodiment,
different unified TCIs are carried in different TCI indication fields;
   or,
the different unified TCIs are carried in one TCI indication field.

Each of a plurality of separate TCI indication fields may carry one TCI. For example, two separate TCI indication fields may carry TCIs, and each TCI indication field carries one TCI, that is, each TCI indication field indicates one beam direction.

One TCI indication field, that is, one TCI code point, may carry the plurality of TCIs. For example, one TCI indication field may carry two TCIs, that is, one TCI indication field indicates a first TRP beam direction and a second TRP beam direction.

In an embodiment, the PUSCH includes at least one of:
a downlink control information (DCI) scheduled PUSCH;
a scheduling-free typel configured grant (CG) PUSCH; or
a scheduling-free type 2 CG PUSCH.

The PUSCH may be scheduled by a single DCI. The DCI may be transmitted via a PDCCH resource.

The configured grant CG PUSCH is classified into two types including typel and type2. Type1 CG PUSCH may be configured with all parameters by RRC signaling, and once configured, and may be sent periodically once configured. Type2 CG PUSCH may be configured with part of parameters by the RRC signaling, and then requires to be activated/deactivated by the downlink control information (DCI), with remaining part of parameters being given in an activated DCI, , and may be used periodically after activation.

In an embodiment, the TCI may be carried in at least one of:
a radio resource control (RRC) signaling;
a media access control-control unit (MAC-CE) signaling; or
a DCI signaling.

The base station may carry the TCIs by different signalings to improve flexibility of indicating the TCIs.

Therefore, on the one hand, different TCIs indicate the beam information of different antenna panels respectively, and the beam information of each antenna panel can be configured separately, which improves flexibility of beam configuration. On the other hand, with performing the NC-JT of the PUSCH using the SDM, the plurality of different antenna panels perform transmission simultaneously, which reduces an uplink transmission delay under multi-TRPs and improves throughput. Different antenna panels can be independently precoded, an impact of a transmission environment on transmission is reduced, and transmission reliability is improved. The plurality of antenna panels performs transmission using the same transmission resource, the transmission resource is saved and transmission resource utilization is improved.

In an embodiment, the different TCIs are associated with different data transmission layer sets, one of the data transmission layer sets comprises one or more data transmission layers, and data transmission layers of the different data transmission layer sets are different.

The data transmission layer set associated with the TCI may be a data transmission layer set sent by an antenna panel associated with the TCI. Each TCI may be associated with a different data transmission layer set, that is, each antenna panel may send a different data transmission layer.

For example, the terminal has two antenna panels. A data transmission layer set of a TCI corresponding to one antenna panel includes two data transmission layers of layer 1 and layer 2. A data transmission layer set of a TCI corresponding to the other one antenna panel includes two data transmission layers of layer 3 and layer 4. In this way, one antenna panel may be used to transmit two data transmission layers, namely, layer 1 and layer 2, and the other antenna panel may be used to transmit two data transmission layers, namely, layer 3 and layer 4.

In an embodiment, a maximum number of data transmission layers in a data transmission layer set associated with the TCI is a maximum number of data transmission layers supported by an antenna panel corresponding to the TCI.

The data transmission layers supported by different antenna panels may be different or the same. Because different antenna panels use data transmission layers corresponding to their own TCI for transmission. Therefore, the maximum number of data transmission layers in the data transmission layers associated with the TCI may be the maximum number of data transmission layers supported by the antenna panel corresponding to the TCI.

For example, the terminal may report, to the network side device such as a base station, a maximum number of ports included in a maximum source reference signal (SRS) resource supported by each of the different antenna panels of the terminal (the network side device may determine the maximum number of data transmission layers supported by the antenna panel based on the maximum number of ports). For example, the maximum number of ports may be determined as the maximum number of data transmission layers that can be supported by the antenna panel), or the maximum number of data transmission layers that can be supported by the UE. When indicating the TCI to the terminal, the network side device may determine the number of data transmission layers in the data transmission layer set based on the maximum number of data transmission layers that can be supported by the antenna panel.

For example, respective maximum numbers of data transmission layers that can be supported by two antenna panels (antenna panel 1 and antenna panel 2) of the UE are N_p1 and N_p2. Then, a maximum number of data transmission layers in a data transmission layer set associated with a TCI corresponding to antenna panel 1 is less than or equal to N_p1, and a maximum number of data transmission layers in a data transmission layer set associated with a TCI corresponding to antenna panel 2 is less than or equal to N_p2.

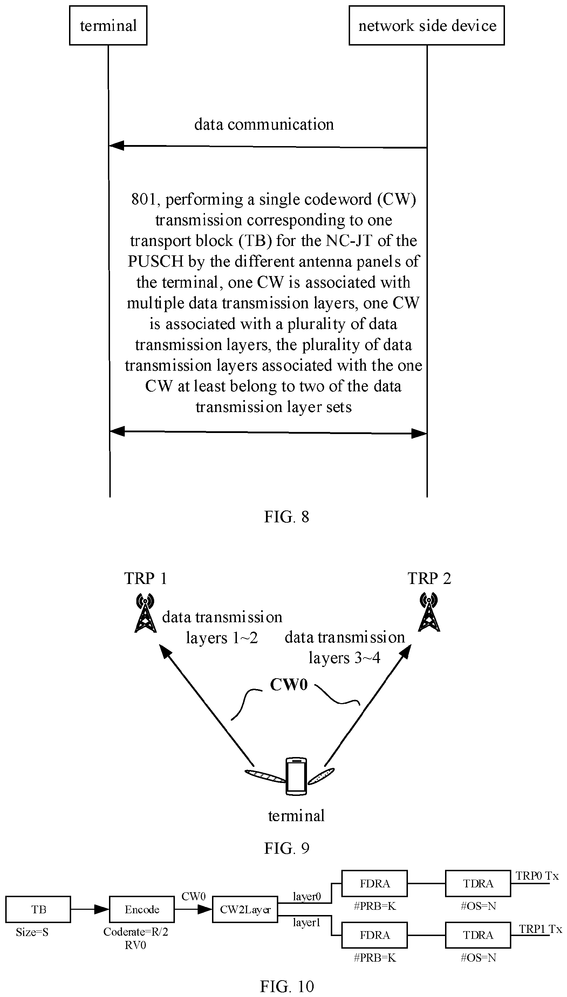

As shown in FIG. 8, an illustrative embodiment provides a method for PUSCH configuration. The method may be performed by a network side device and/or a terminal of a cellular mobile communication system, and include a following step.

At step 801, a single codeword (CW) transmission corresponding to one TB for the NC-JT of the PUSCH is performed by the different antenna panels of the terminal, one CW is associated with multiple data transmission layers, one CW is associated with a plurality of data transmission layers, the plurality of data transmission layers associated with the one CW at least belong to two of the data transmission layer sets.

One codeword (CW) may be obtained from one TB after data processing. The data processing may include: code block segmentation, channel coding, rate matching, code block concatenation, etc. The CW of one TB may be mapped to different data transmission layers on the same time-frequency resource in the same slot, and may be transmitted by the plurality of antenna panels of the terminal. Different TCI indicates data transmission layers sent by different antenna panels.

Exemplarily, as shown in FIG. 9, taking the terminal including two antenna panels as an example, the data transmission layer set of the TCI associated with antenna panel 1 includes two data transmission layers of data transmission layer 1 and data transmission layer 2. The data transmission layer set of the TCI associated with antenna panel 2 includes two data transmission layer of data transmission layer 3 and data transmission layer 4. The CW of one TB may be mapped to four data transmission layers including the data transmission layer 1, the data transmission layer 2, the data transmission layer 3 and the data transmission layer 4, that is, data of the four data transmission layers forms one CW. During sending, the antenna panel 1 sends data of the data transmission layer 1 and the data transmission layer 2, and the antenna panel 2 sends data of the data transmission layer 3 and the data transmission layer 4. One antenna panel corresponds to one TRP. Each TRP may correspond to one beam direction. Beam directions of respective TRPs are different.

In this way, the plurality of data transmission layers of one TB are sent by the plurality of antenna panels. Each antenna panel corresponds to a TRP in a different beam direction, realizing the SDM. The plurality of antenna panels perform transmission simultaneously, reducing an uplink transmission delay under multiple TRPs, and improving a throughput rate.

In an embodiment, the single codeword (CW) transmission for the NC-JT of the PUSCH is performed by the different antenna panels of the terminal using a single redundancy version (RV).

As shown in FIG. 10, for one TB corresponding to one CW, one TB may perform rate matching and the like based on one redundant version to obtain the one CW. Encoded bits are stored in a circular buffer and sequentially read from the circular buffer according to the redundant version during each transmission, thus achieving rate matching.

The RV may be carried in the DCI by the network side device and indicated to the terminal.

In an embodiment, the data transmission layers may be mapped for the CW based on channel conditions of the plurality of TRPs. That is, rank allocation is performed based on the channel condition of the plurality of TRPs.

For example, in a multiple TRP scenario, more data transmission layers may be configured for a TRP with a channel condition higher than a predetermined threshold. Fewer data transmission layers may be configured for a TRPs with a channel condition lower than the predetermined threshold.

In the related art, for MTRP, a number of RANs configured for each TRP is fixed. For example, for a case of RANK=3, that is, 3 data transmission layers, DMRS allocation can only support RANK allocation of 2 plus 1 in two TRP directions, and does not support, for example, RANK allocation of 1 plus 2 (that is, TRP1 is configured with one data transmission layer, TRP2 is configured with two data transmission layers). For a case of RANK=4, the DMRS allocation can only support RANK allocation of 2 plus 2, and does not support, for example, RANK allocation of 1 plus 3 or 3 plus 1.

The RANK allocation method may not be limited to the related art, while the RANK allocation may be performed based on channel conditions of the plurality of TRPs. For example, for the case of RANK=4, the RANK allocation of 2 plus 2 is supported, and the RANK allocation of 1 plus 3 or 3 plus 1 can also be used. In this way, flexibility of the RANK allocation is improved, and it can adapt to the channel conditions of different TRPs.

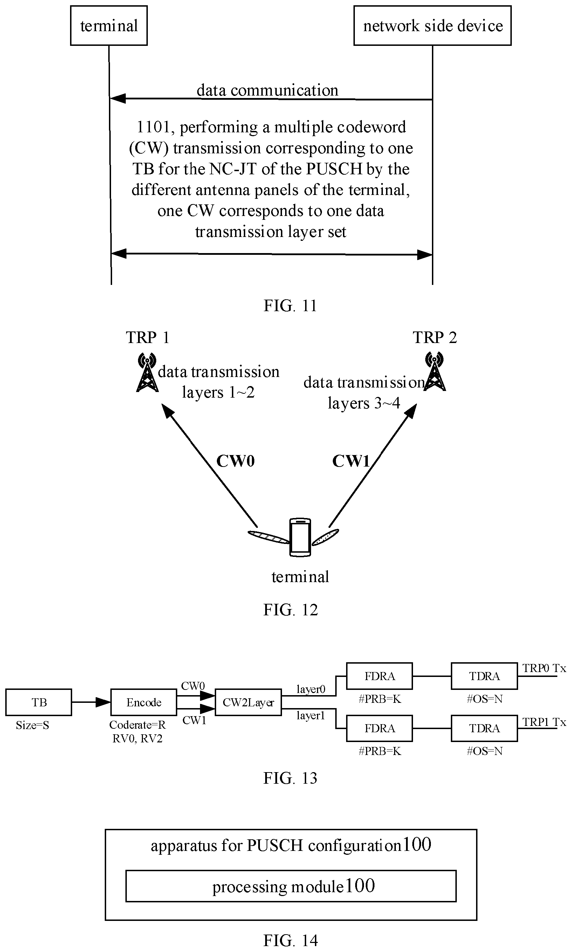

As shown in FIG. 11, an illustrative embodiment provides a method for PUSCH configuration. The method may be performed by a network side device and/or a terminal of a cellular mobile communication system, and include a following step.

At step 1101, a multiple codeword (CW) transmission corresponding to one TB for the NC-JT of the PUSCH is performed by the different antenna panels of the terminal, one CW corresponds to one data transmission layer set.

M codewords (CW) may be obtained from one TB after data processing, where M is a positive integer greater than or equal to 2. The data processing may include code block segmentation, channel coding, rate matching, code block concatenation, etc. Each CW protects a copy of one TB.

Each CW may be mapped to one data transport layer set. Each CW may correspond to a different data transmission layer set. M codewords may be sent by the terminal by M antenna panels. Different TCIs indicate different antenna panels to send corresponding data transmission layer sets.

Exemplarily, as shown in FIG. 12, taking the terminal including two antenna panels as an example, data transmission layer set 1 of the TCI associated with antenna panel 1 includes two data transmission layers of data transmission layer 1 and data transmission layer 2, and data transmission layer set 2 of the TCI associated with antenna panel 2 includes two data transmission layer of data transmission layer 3 and data transmission layer 4. The data transmission layer set 1 is different from the data transmission layer set 2. Data processing is performed on one TB to obtain CW0 and CW1. CW0 may be mapped to the data transmission layer set 1, that is, data of the data transmission layer set 1 forms CW0. CW1 may be mapped to the data transmission layer set 2, that is, data of the data transmission layer set 2 forms CW1. When uplink sending of the terminal, the antenna panel 1 sends the data of data transmission layer set 1, and the antenna panel 2 sends the data of the data transmission layer set 2. One antenna panel corresponds to one TRP. Each TRP may correspond to one beam direction. The beam directions of respective TRPs are different.

In this way, the plurality of CWs of one TB are sent by the plurality of antenna panels. Each antenna panel corresponds to a TRP in a different beam direction, realizing SDM. The plurality of antenna panels performs transmission simultaneously, thus reducing an uplink transmission delay under multiple TRPs, and improving a throughput rate. Meanwhile, sending two copies of one TB simultaneously may improve reliability of data transmission.

In an embodiment, different codeword (CW) transmission for the NC-JT of the PUSCH is implemented by the terminal by using a plurality of RVs.

As shown in FIG. 13, different CWs may be obtained from the same TB through rate matching operations corresponding to different RVs.

Rate matching may be performed on one TB based on the plurality of redundant versions to obtain the plurality of different CWs.

The RVs may be carried in a DCI by the network side device and indicated to the terminal.

In an embodiment, the NC-JT of the PUSCH is performed by the different antenna panels of the terminal using a single modulation and coding strategy (MCS).

In an embodiment, different TCIs correspond to the same number of data transmission layers.

The single MCS may be carried in the DCI by the network side device and indicated to the terminal.

The single MCS may be applicable for determining the plurality of CWs using one TB, where each CW may correspond to one TRP. That is, the plurality of antenna panels correspond to one MCS. In this way, the plurality of CWs generated has the same bit number, and thus the TRP corresponding to each CW has the same RANK number. That is, each CW corresponds to the same number of data transmission layers. The uplink transmission code rate and the throughput rate may be further increased, and an anti-blockage capability may be improved. The single MCS may be indicated by a DCI MCS indication field.

Exemplarily, as shown in FIG. 11, the terminal includes two antenna panels, corresponding to two TRPs respectively. The two antenna panels correspond to one MCS, and CW0 and CW1 are determined from one TB using the same MCS. In this way, the bit number corresponding to CW0 is the same as the bit number corresponding to CW1. Therefore, CW0 and CW1 correspond to different TRPs have the same RANK number. The TRP corresponding to each CW has the same RANK number. That is, each CW corresponds to the same number of data transmission layers.

In an embodiment, the NC-JT of the PUSCH is performed by the different antenna panels of the terminal using different MCSs.

In an embodiment, the different TCIs correspond to the same number of data transmission layers;
or,
the different TCIs correspond to different numbers of data transmission layers.

The plurality of MCSs may be carried in the DCI by the network side device and indicated to the terminal.

Each MCS of the plurality of MCSs may be applicable for determining one CW using one TB, where each CW may correspond to one TRP. That is, each antenna panel corresponds to one MCS. Each MCS may correspond to a different RV. In this way, the bit numbers of the plurality of CWs generated by different MCSs may be the same or different.

When the plurality of CWs have the same bit number, the TRP corresponding to each CW may have the same RANK number, that is, each CW corresponds to the same number of data transmission layers.

When the plurality of CWs have different bit numbers, the TRP corresponding to each CW may have different RANK numbers, that is, each CW may correspond to a different number of data transmission layers. The RANK numbers may be configured for different CWs based on data volume of different CWs. Instead of using a configuration of a fixed RANK number, the method may improve flexibility of RANK number allocation.

For example, the terminal has two antenna panels, corresponding to two TRPs respectively. Each of the two antenna panels correspond to one MCS, and CW0 and CW1 are determined from one TB using the different MCS. The bit numbers corresponding to CW0 and CW1 may be the same or different. When CW0 and CW1 have the same bit number, the RANK numbers of CW0 and CW1 corresponding to different TRPs are also the same. While CW0 and CW1 have different bit numbers, the RANK numbers of CW0 and CW1 corresponding to different TRPs may be the same or different. That is, each CW corresponds to the same number of data transmission layers.

In an embodiment, the different TCIs are associated with different demodulation reference signal (DMRS) port sets, one of the DMRS port sets includes one or more DMRS ports, and DMRS ports in the different DMRS port sets are different.

For NC-JT, each TCI may be associated with a different DMRS port set, that is, each antenna panel uses SDM to perform NC-JT with different DMRS ports under the same time domain resource and the same frequency domain resource.

A specific example is provided below in combination with any of the above embodiments.

N TCI states suitable for simultaneous transmission are configured for a terminal based on a unified TCI framework. Depending on whether MP/MTRP beam consistency is established, the N TCI states may be indicate to the terminal simultaneously by N different joint TCIs or N separate uplink TCIs, where N may be 2. That is, there may be two TICs including TCI1 and TCI2. Each TCI corresponds to a transmitting/receiving beam of one antenna panel of the terminal and faces one transmit TRP direction. Respective TCIs include different QCL Type-D source RSs, and the terminal uses antenna panels corresponding to the QCL Type-D source RSs included in the TCI to receive.

When the unified TCI is not configured, it is fell back to the 3GPP release 15/16 (R15/16) indication scheme and spatialRelationInfo1/2 indicated by a SRI combination is used.

For support of a number of data transmission layers actually corresponding to each TCI, a terminal capability need to be considered. A maximum number of ports included in a maximum SRS resource supported by each of different panels reported by the terminal, or a maximum number of data transmission layers supported may be different. That is, the maximum numbers of data transmission layers supported by different antenna panels are N_p1, N_p2, which correspond to panel1 and panel2 respectively.

SDM transmission based on a single DCI (S-DCI) may realize NC-JT transmission of uplink MTRP through the following schemes.

For scheme SDM-1, as shown in FIG. 9,
data of one TB may perform transmission through different layers on the same time-frequency resource in the same slot, and each TCI is associated with one data transmission layer or the plurality of data transmission layers. Each TCI is associated with a corresponding allocated group of DMRS ports or port groups.

Single CW transmission is achieved through a single RV, and encoded bits are transmitted/received in different data transmission layers respectively.

The maximum number of data transmission layers supported is 4 layers.

It may support option-1, which is limited to a CW to data transport layer allocation rule of a current protocol; or support option-2, which is a RANK unbalanced allocation rule to better adapt to an MTRP channel condition;

A number of data transmission layers corresponding to TCI1 may not exceed N_p1, and a number of data transmission layers corresponding to TCI2 may not exceed N_p2.

For scheme SDM-2, as shown in FIG. 12,
data of one TB may perform transmission by 2 CWs on the same time-frequency resource in the same slot through different layers. Each TCI is associated with one CW and one data transmission layer or the plurality of data transmission layers corresponding to the one CW. Each TCI is associated with a corresponding allocated group of DMRS ports or port groups.

Multiply CW transmission is achieved through a plurality of RVs, and encoded bits are transmitted/received in different data transmission layers respectively.

The maximum number of data transmission layers supported is 4 layers.

A single MCS is used.

The number of data transmission layers corresponding to TCI1 may not exceed N_p1, and the number of data transmission layers corresponding to TCI2 may not exceed N_p2.

The uplink transmission code rate and the throughput rate may be further increased, and an anti-blockage capability may be improved.

For scheme SDM-3, as shown in FIG. 12,
data of one TB may perform transmission by 2 CWs on the same time-frequency resource in the same slot through different layers. Each TCI is associated with one CW and one data transmission layer or the plurality of data transmission layers corresponding to the one CW. Each TCI is associated with a corresponding allocated group of DMRS ports or port groups.

Multiply CW transmission is achieved through a plurality of RVs, and encoded bits are transmitted/received in different data transmission layers respectively.

The maximum number of data transmission layers supported is 4 layers.

Different TCIs are associated with different MCS.

Support for unbalanced distribution of RANK among TRPs is allowed.

The number of data transmission layers corresponding to TCI1 may not exceed N_p1, and the number of data transmission layers corresponding to TCI2 may not exceed N_p2.

An embodiment of the present disclosure also provides an apparatus for PUSCH configuration. As shown in FIG. 14, the apparatus is applied in a network side device and/or a terminal of cellular mobile wireless communication. The apparatus 1000 includes a processing module 100.

The processing module 100 is configured to configure different transmission configuration indications (TCIs) for different antenna panels of a terminal, for a non-coherent joint transmission (NC-JT) of a PUSCH; in which the TCIs are associated with beam information, and the different TCIs are associated with the same transmission resource simultaneously, the transmission resource includes a time domain resource and a frequency domain resource, a plurality of different antenna panels perform the NC-JT of the PUSCH using spatial division multiplexing (SDM).

In an embodiment, the different TCIs are associated with different data transmission layer sets, one of the data transmission layer sets comprises one or more data transmission layers, and data transmission layers of the different data transmission layer sets are different.

In an embodiment, a single codeword (CW) transmission corresponding to one transport block (TB) for the NC-JT of the PUSCH is performed by the different antenna panels of the terminal, one CW is associated with multiple data transmission layers, one CW is associated with a plurality of data transmission layers, the plurality of data transmission layers associated with the one CW at least belong to two of the data transmission layer sets.

In an embodiment, the single codeword (CW) transmission for the NC-JT of the PUSCH is performed by the different antenna panels of the terminal using a single redundancy version (RV).

In an embodiment, a multiple codeword (CW) transmission corresponding to one TB for the NC-JT of the PUSCH is performed by the different antenna panels of the terminal, one CW corresponds to one data transmission layer set.

In an embodiment, different codeword (CW) transmission for the NC-JT of the PUSCH is implemented by the terminal by using a plurality of RVs.

In an embodiment, the NC-JT of the PUSCH is performed by the different antenna panels of the terminal using a single modulation and coding strategy (MCS).

In an embodiment, different TCIs correspond to the same number of data transmission layers.

In an embodiment, the NC-JT of the PUSCH is performed by the different antenna panels of the terminal using different MCSs.

In an embodiment, the different TCIs correspond to the same number of data transmission layers;
or,
the different TCIs correspond to different numbers of data transmission layers.

In an embodiment, a maximum number of data transmission layers in a data transmission layer set associated with the TCI is a maximum number of data transmission layers supported by an antenna panel corresponding to the TCI.

In an embodiment, the different TCIs are associated with different demodulation reference signal (DMRS) port sets, one of the DMRS port sets comprises one or more DMRS ports, and DMRS ports in the different DMRS port sets are different.

In an embodiment, the different TCIs correspond to different transmission reception point (TRP) directions of a base station.

In an embodiment, the different TCIs indicate different quasi co-located type-D source reference signals, and the quasi co-located type-D source reference signals are configured to determine the TRP directions.

In an embodiment, the TCI includes one of:
a unified TCI;
a spatial relation information (SRI); or
a sounding reference signal resource indication (SRI).

In an embodiment, different unified TCIs are carried in different TCI indication fields;
or,
the different unified TCIs are carried in one TCI indication field.

In an embodiment, the unified TCI includes one of:
a joint TCI; or
a separate TCI.

In an embodiment, the PUSCH includes at least one of:
a downlink control information (DCI) scheduled PUSCH;
a scheduling-free typel configured grant (CG) PUSCH; or
a scheduling-free type 2 CG PUSCH.

In an embodiment, the TCI is carried in at least one of:
a radio resource control (RRC) signaling;
a media access control-control unit (MAC-CE) signaling; or
a DCI signaling.

In an illustrative embodiment, the processing module 100 may be implemented by one or more of a central processing unit (CPU), a graphics processing unit (GPU), a baseband processor (BP), an application specific integrated circuit (ASICs), a DSP, a programmable logic device (PLD), a complex programmable logic device (CPLD), a field programmable gate array (FPGA), a general processor, a controller, a micro controller unit (MCU), a microprocessor, or other electronic components, to implement the above methods.

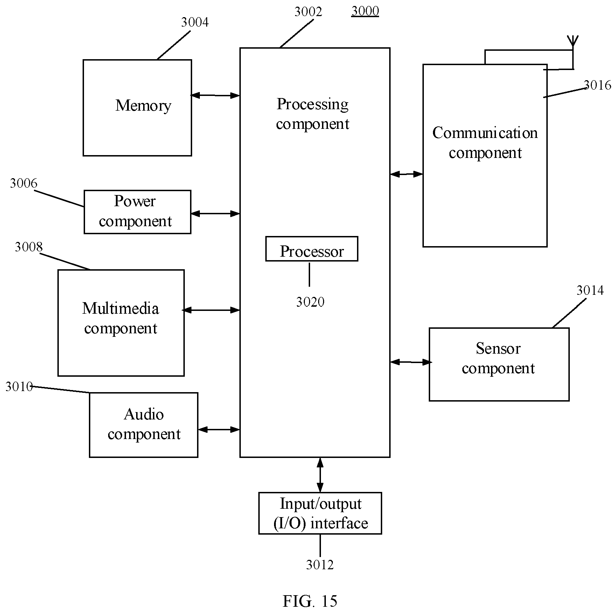

FIG. 15 is a block diagram illustrating a device 3000 for PUSCH configuration according to an illustrative embodiment. For example, the device 3000 may be a user equipment such as a mobile phone, a computer, a digital broadcasting terminal, a message transceiving equipment, a game console, a tablet equipment, a medical equipment, a fitness equipment, or a personal digital assistant.

As illustrated in FIG. 15, the device 3000 may include one or more of: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the device 3000, such as the operations associated with display, telephone calls, data communications, camera operations, and recording operations. The processing component 3002 may include one or more processors 3020 for executing instructions to implement all or a part of the above method. Moreover, the processing component 3002 may include one or more modules which facilitate the interaction between the processing component 3002 and other components. For example, the processing component 3002 may include a multimedia module to facilitate the interaction between the multimedia component 3008 and the processing component 3002.

The memory 3004 is configured to store various types of data to support the operation of the device 3000. Examples of such data include instructions for any application or method operated on the device 3000 for performing contraction data, phonebook data, messages, pictures, video, etc. The memory 3004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The power component 3006 is configured to provide power to various components of the device 3000. The power component 3006 may include a power management system, one or more power sources, and any other components associated with the generation, management, and distribution of power in the device 3000.

The multimedia component 3008 includes a screen providing an output interface between the device 3000 and the user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 3008 includes a front camera and/or a rear camera. When the device 3000 is in an operation mode, such as a shooting mode or a video mode, the front camera and/or the rear camera may receive external multimedia data. Each front camera and rear camera may be a fixed optical lens system or have a focal length and an optical zoom capability.

The audio component 3010 is configured to output and/or input an audio signal. For example, the audio component 3010 includes a microphone ("MIC") for receiving an external audio signal when the device 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker for outputting the audio signal.

The I/O interface 3012 is configured to provide an interface between the processing component 3002 and peripheral interface modules, such as a keyboard, a click wheel, buttons, and the like. These buttons may include, but be not limited to, a home button, a volume button, a start button, and a lock button.

The sensor component 3014 includes one or more sensors for providing status assessments of various aspects of the device 3000. For example, the sensor component 3014 may detect an open/closed state of the device 3000, relative positioning of components, e.g., the display and the keypad of the device 3000, a position change of the device 3000 or a component of the device 3000, a presence or absence of user contraction with the device 3000, an orientation or an acceleration/deceleration of the device 3000, and a temperature change of the device 3000. The sensor component 3014 may include a proximity sensor configured to detect the presence of nearby objects without any physical contact. The sensor component 3014 may also include an optical sensor, such as a CMOS or CCD image sensor, for use in an imaging application. In some embodiments, the sensor component 3014 may also include an acceleration sensor, a gyro sensor, a magnetic sensor, a pressure sensor or a temperature sensor.

The communication component 3016 is configured to facilitate communication, wired or wirelessly, between the device 3000 and other devices. The device 3000 may access a wireless network based on a communication standard, such as Wi-Fi, 30G, 3G, or a combination thereof. In an illustrative embodiment, the communication component 3016 receives a broadcast signal or broadcast associated information from an external broadcast management system via a broadcast channel. In an illustrative embodiment, the communication component 3016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more illustrative embodiments, the device 3000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an illustrative embodiment, there is also provided a non-transitory computer readable storage medium including instructions, such as the memory 3004 including the instructions. The instructions may be executed by the processor 3020 in the device 3000 for performing the above method. For example, the non-transitory computer readable storage medium may be a ROM, a RAM, a CD-ROM, a magnetic tape, a floppy disc, an optical data storage device, and the like.

After considering the specification and practicing the disclosure herein, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

## Claims

1. A method for physical uplink shared channel (PUSCH) configuration, comprising:
configuring different transmission configuration indications (TCIs) for different antenna panels of a terminal, for a non-coherent joint transmission (NC-JT) of a PUSCH; wherein the TCIs are associated with beam information, and the different TCIs are associated with the same transmission resource simultaneously, the transmission resource comprises a time domain resource and a frequency domain resource, a plurality of different antenna panels perform the NC-JT of the PUSCH using spatial division multiplexing (SDM).

2. The method according to claim 1, wherein the different TCIs are associated with different data transmission layer sets, one of the data transmission layer sets comprises one or more data transmission layers, and data transmission layers of the different data transmission layer sets are different.

3. The method according to claim 2, further comprising:
performing, by the different antenna panels of the terminal, a single codeword (CW) transmission corresponding to one transport block (TB) for the NC-JT of the PUSCH, wherein one CW is associated with multiple data transmission layers, the one CW is associated with a plurality of data transmission layers, the plurality of data transmission layers associated with the one CW at least belong to two of the data transmission layer sets.

4. The method according to claim 3, further comprising:
performing, by the different antenna panels of the terminal, the single codeword (CW) transmission for the NC-JT of the PUSCH using a single redundancy version (RV).

5. The method according to claim 2, further comprising:
performing, by the different antenna panels of the terminal, a multiple codeword (CW) transmission corresponding to one TB for the NC-JT of the PUSCH, wherein one CW corresponds to one data transmission layer set.

6. The method according to claim 5, wherein different codeword (CW) transmission for the NC-JT of the PUSCH is implemented by the terminal by using a plurality of RVs.

7. The method according to claim 5, further comprising:
performing, by the different antenna panels of the terminal, the NC-JT of the PUSCH using a single modulation and coding strategy (MCS).

8. The method according to claim 7, wherein different TCIs correspond to the same number of data transmission layers.

9. The method according to claim 5, further comprising:
performing, by the different antenna panels of the terminal, the NC-JT of the PUSCH is using different MCSs.

10. The method according to claim 5, wherein
the different TCIs correspond to the same number of data transmission layers; or,
the different TCIs correspond to different numbers of data transmission layers.

11. The method according to claim 2, wherein a maximum number of data transmission layers in a data transmission layer set associated with the TCI is a maximum number of data transmission layers supported by an antenna panel corresponding to the TCI.

12. The method according to any one of claims 1 to 11, wherein the different TCIs are associated with different demodulation reference signal (DMRS) port sets, one of the DMRS port sets comprises one or more DMRS ports, and DMRS ports in the different DMRS port sets are different.

13. The method according to any one of claims 1 to 11, wherein the different TCIs correspond to different transmission reception point (TRP) directions of a base station.

14. The method according to claim 13, wherein the different TCIs indicate different quasi co-located type-D source reference signals, and the quasi co-located type-D source reference signals are configured to determine the TRP directions.

15. The method according to any one of claims 1 to 11, wherein the TCI comprises one of:
a unified TCI;
a spatial relation information (SRI); or
a sounding reference signal resource indication (SRI).

16. The method according to claim 15, wherein
different unified TCIs are carried in different TCI indication fields; or,
the different unified TCIs are carried in one TCI indication field.

17. The method according to claim 15, wherein the unified TCI comprises one of:
a joint TCI; or
a separate TCI.

18. The method according to any one of claims 1 to 11, wherein the PUSCH comprises at least one of:
a downlink control information (DCI) scheduled PUSCH;
a scheduling-free typel configured grant (CG) PUSCH; or
a scheduling-free type 2 CG PUSCH.

19. The method according to any one of claims 1 to 11, wherein the TCI is carried in at least one of:
a radio resource control (RRC) signaling;
a media access control-control unit (MAC-CE) signaling; or
a DCI signaling.

20. An apparatus for physical uplink shared channel (PUSCH) configuration, comprising:
a processing module, configured to configure different transmission configuration indications (TCIs) for different antenna panels of a terminal, for a non-coherent joint transmission (NC-JT) of a PUSCH; wherein the TCIs are associated with beam information, and the different TCIs are associated with the same transmission resource simultaneously, the transmission resource comprises a time domain resource and a frequency domain resource, a plurality of different antenna panels perform the NC-JT of the PUSCH using spatial division multiplexing (SDM).

21. The apparatus according to claim 20, wherein the different TCIs are associated with different data transmission layer sets, one of the data transmission layer sets comprises one or more data transmission layers, and data transmission layers of the different data transmission layer sets are different.

22. The apparatus according to claim 21, wherein the processing module is configured to,
perform, by the different antenna panels of the terminal, a single codeword (CW) transmission corresponding to one transport block (TB) for the NC-JT of the PUSCH, wherein one CW is associated with multiple data transmission layers, the one CW is associated with a plurality of data transmission layers, the plurality of data transmission layers associated with the one CW at least belong to two of the data transmission layer sets.

23. The apparatus according to claim 22, wherein the processing module is configured to,
perform, by the different antenna panels of the terminal, the single codeword (CW) transmission for the NC-JT of the PUSCH using a single redundancy version (RV).

24. The apparatus according to claim 21, wherein the processing module is configured to,
perform, by the different antenna panels of the terminal, a multiple codeword (CW) transmission corresponding to one TB for the NC-JT of the PUSCH, wherein one CW corresponds to one data transmission layer set.

25. The apparatus according to claim 24, wherein different codeword (CW) transmission for the NC-JT of the PUSCH is implemented by the terminal using a plurality of RVs.

26. The apparatus according to claim 24, wherein the processing module is configured to,
perform, by the different antenna panels of the terminal, the NC-JT of the PUSCH using a single modulation and coding strategy (MCS).

27. The apparatus according to claim 26, wherein different TCIs correspond to the same number of data transmission layers.

28. The apparatus according to claim 24, wherein the processing module is configured to,
perform, by the different antenna panels of the terminal, the NC-JT of the PUSCH using different MCSs.

29. The apparatus according to claim 24, wherein
the different TCIs correspond to the same number of data transmission layers; or,
the different TCIs correspond to different numbers of data transmission layers.

30. The apparatus according to claim 21, wherein a maximum number of data transmission layers in a data transmission layer set associated with the TCI is a maximum number of data transmission layers supported by an antenna panel corresponding to the TCI.

31. The apparatus according to any one of claims 20 to 30, wherein the different TCIs are associated with different demodulation reference signal (DMRS) port sets, one of the DMRS port sets comprises one or more DMRS ports, and DMRS ports in the different DMRS port sets are different.

32. The apparatus according to any one of claims 20 to 30, wherein the different TCIs correspond to different transmission reception point (TRP) directions of a base station.

33. The apparatus according to claim 32, wherein the different TCIs indicate different quasi co-located type-D source reference signals, and the quasi co-located type-D source reference signals are configured to determine the TRP directions.

34. The apparatus according to any one of claims 20 to 30, wherein the TCI comprises one of:
a unified TCI;
a spatial relation information (SRI); or
a sounding reference signal resource indication (SRI).

35. The apparatus according to claim 34, wherein:
different unified TCIs are carried in different TCI indication fields; or,
the different unified TCIs are carried in one TCI indication field.

36. The apparatus according to claim 34, wherein the unified TCI comprises one of:
a joint TCI; or
a separate TCI.

37. The apparatus according to any one of claims 20 to 30, wherein the PUSCH comprises at least one of:
a downlink control information (DCI) scheduled PUSCH;
a scheduling-free typel configured grant (CG) PUSCH; or
a scheduling-free type 2 CG PUSCH.

38. The apparatus according to any one of claims 20 to 30, wherein the TCI is carried in at least one of:
a radio resource control (RRC) signaling;
a media access control-control unit (MAC-CE) signaling; or
a DCI signaling.

39. A communication device, comprising a processor, a memory, and an executable program stored on the memory and capable of being run by the processor, wherein the processor is configured to implement the method for physical uplink shared channel (PUSCH) configuration according to any one of claims 1 to 19 when running the executable program.

40. A storage medium storing an executable program, wherein, when the executable program is executed by a processor, steps of the method for physical uplink shared channel (PUSCH) configuration according to any one of claims 1 to 19 is implemented.
